# EUROPEAN PATENT APPLICATION

(11) **EP 0 789 327 A2**
(43) Date of publication of application: **13.08.1997**
(21) Application number: 97102012.8
(22) Date of filing: 07.02.1997
(51) Int. Cl.: G06T 9/20

(54) **Contour coding method**

(30) Priority: 09.02.1996 JP 23571/96
(71) Applicant: MATSUSHITA ELECTRIC INDUSTRIAL CO., LTD., Kadoma-shi, Osaka-fu, 571 (JP)
(72) Inventor: Kadono, Shinya, Kobe-shi, Hyogo 651-11 (JP)
(74) Representative: Grünecker, Kinkeldey, Stockmair & Schwanhäusser Anwaltssozietät

(57) **Abstract**

The invention relates to a contour coding method, in which a straight line selectively arranged around a contour graphic is used as a baseline, intersections of n straight lines crossing this baseline at a specific angle and the contour are calculated, and the distance between each intersection and the baseline is coded {x1, x2, ..., xn} to obtain contour coded signals. In the decoding method, coded signals are decoded to produce {x1, x2, ..., xn}, n points of which distance from the baseline on the n straight lines crossing the baseline at the specific angle is individually {x1, x2, ..., xn} are obtained as decoded points on the contour, and the contour graphic of the image is decoded by tracing all decoded points on the contour of the image by the curve. Therefore, since the coded data is created by making use of the fact that the contour graphic can be specified simply by the distance from the baseline, the method of coding and decoding the contour graphic efficiently, and the coding and decoding apparatus using the same method can be realized.

## Description

### BACKGROUND OF THE INVENTION

The present invention relates to a contour coding method and a contour decoding method for efficiently coding and decoding contour graphics used in various types of image processing and image coding, a contour coding apparatus and a contour decoding apparatus employing the same methods, and a recording medium recording the same methods.

Among conventional contour graphic coding methods, a famous method called chain coding is known. This technique is to divide a contour into small vectors in horizontal, vertical and oblique directions, and to code symbols corresponding to small vectors. Supposing the precision of a small vector to be one pixel, reversible coding is possible, or when the precision of small vector is made rough, although irreversible, the number of bits can be saved as compared with the reversible case.

It is, however, a feature of the chain coding that reversible coding is realized, and irreversible coding is inferior in coding efficiency. If allowing a slight distortion, it is not suited to image coding intended to save bits substantially, and therefore techniques of contour coding by employing curve approximation have been proposed (Japanese Laid-open Patents 58-134745, etc.). It is designed to code curve parameters for approximating the contour graphic by curve at positions of feature points on the contour and the contour among feature points, and it requires a tremendous amount of calculation for leading out the curves, and the number of coding bits cannot be controlled to a specific number of bits. Accordingly, as disclosed in ISO/IEC JTC1/SC29/WG11 N1064. etc., it is proposed to approximate the contour graphic by a polygon, not by a curve, and to code the difference between the polygon and actual contour.

In this technique of approximating the contour by a polygon, however, the apices of a polygon are located on the contour same as in curve approximation, and in the contour graphic of a complicated shape requiring coding of multiple spices, many bits are needed for coding the apices, and the coding efficient is not superior. Thus, it was a problem in enhancement of efficiency in coding and decoding technique dealing with contour graphics.

Incidentally, the contour is often handled simultaneously with color signals of graphic having its contour, and in the present mainstream of coding such as JPEG or MPEG, since color signals are formed in blocks and coded, unless the contour graphic can be coded in the same block units as the color signals, many devices are needed only for coding of contour graphic from the viewpoint of the coding apparatus for coding all of contour and color image.

### SUMMARY OF THE INVENTION

It is an object of the present invention to provide a technique for coding and decoding only the shape of a contour graphic efficiently, and it is a further object to provide a technique for coding a contour graphic applicable to an existing technique for coding an image including a contour graphic.

To achieve the objects, the invention is composed as follows.

A first aspect of the invention relates to a contour coding method for coding a contour graphic, in which a straight line selectively arranged around a contour graphic is used as a baseline, intersections of n straight lines crossing this baseline at a specific angle and the contour are calculated, and the distance between each intersection and the baseline is coded {x1, x2, .... xn} to obtain contour coded signals. In the decoding method, coded signals are decoded to produce {x1, x2, ..., xn}, n points of which distance from the baseline on the n straight lines crossing the baseline at the specific angle is individually {x1, x2, ..., xn} are obtained as decoded points on the contour, and the contour graphic of the image is decoded by tracing all decoded points on the contour of the image by the curve. Therefore, since the coded data is created by making use of the fact that the contour graphic can be specified simply by the distance from the baseline, the method of coding and decoding the contour graphic efficiently, and the coding and decoding apparatus using the same method can be realized.

A second aspect of the invention is to facilitate the process of calculating the distance from the baseline more than in the first aspect, and in the contour coding method for coding the contour graphic with the inside and outside of the contour expressed truly or falsely, the contour graphic is decomposed into k (k being a natural number) partial contour graphics, this decomposition expresses the contour graphic by logic operation of every pixel of the k partial contour graphics, the straight line selectively arranged around the contour graphic in every partial contour graphic is used as the baseline, intersections of n straight lines crossing the baseline at a specific angle and the partial contour graphics are calculated, and the distance between each intersection and the baseline is coded {x1, x2, ..., xn}, and the contour coded signals are obtained together with the signals showing the constitution of the partial contour graphics. In its decoding method, the coded signals are decoded to lead out the constitution of the distance of n points {x1, x2, ..., xn} and the partial contour graphics, n points of which distance from the baseline on the n straight lines crossing the baseline at the specific angle is {x1, x2, ..., xn} respectively are obtained as decoded points on the contour, the points on the contour are traced by curves to form the contour, the pixels of the partial contour graphics are expressed truly or falsely, the logic operation of each pixel of each partial contour graphic corresponding to the same pixel position of the image of the partial contour graphic is calculated according to the constitution of the produced partial contour graphics, and the results of logic operations are integrated to decode the contour graphic of the entire picture of the image. As a result, by decomposing the contour graphic into partial contour graphics, and handling also the information showing the contour graphic is obtained by combining the partial contour graphics in which manner, a more efficient coding and decoding method of contour graphic, and coding and decoding apparatus using the method are realized.

A third aspect of the invention is applied to a predictive coding technique used in coding of a moving picture, relating to a contour coding method of a contour graphic, in which a predictive contour graphic of the contour graphic to be coded is created, n feature points are provided on the contour line of this predictive contour graphic, the distance from each feature point of the predictive contour graphic to the contour graphic at the corresponding image position is coded {x1, x2, ..., xn}, and the contour coded signals are obtained. In the decoding method, the coded signals are decoded, the distance of n points is calculated {x1, x2, ..., xn}, the predictive contour graphic of the coded contour graphic is created, n feature points are provided on the contour line of the predictive contour graphic, the distance from each feature point is decoded {x1, x2, ..., xn} as points on the contour, and all decoded points on the contour of the image are traced by curves, and the contour graphic of the image is decoded. Hence, in the predictive coding method, too, the method for efficiently coding and decoding the contour graphic and the contour coding and decoding apparatus employing the method can be realized.

A fourth aspect of the invention is to process the third aspect more efficiently, relating to the contour coding method for coding the contour graphic, in which a predictive contour graphic of the contour graphic to be coded is created, a straight line selectively arranged around the contour graphic is used as a first baseline, a straight line selectively arranged around the predictive contour graphic is used as a second baseline, intersections of n straight lines crossing the first baseline at a specific angle and the contour graphic are calculated, intersections of n straight lines crossing the second baseline at a specific angle and the predictive contour graphic are calculated, the first distance of the intersection of the contour graphic and the first baseline and the second distance of the intersection of the predictive contour graphic and the second baseline are calculated, and the difference of the first and second distances at the corresponding image position is coded {x1, x2, ..., xn} to obtain the contour coded signals. In the decoding method, the coded signals are decoded to calculate the distance difference {x1, x2, ..., xn}, the predictive contour graphic of the coded contour graphic is created, n points of which distance from the predictive contour graphic is {x1, x2, ..., xn} on n straight lines crossing the baseline of the predictive contour graphic at the specific angle are decoded as points on the contour, and all decoded points on the contour of the image are traced by curves, so that the contour graphic of the image is decoded. As a result, the contour graphic and predictive contour graphic can be processed independently, and therefore, in predictive coding, a more efficient coding and decoding method of contour graphic and contour coding and decoding apparatus using the same method are realized.

### BRIEF DESCRIPTION OF THE DRAWINGS

Fig. 1 is a conceptual diagram of contour coding method and contour decoding method according to a first aspect of the invention.

Fig. 2 is a block diagram of embodiment 1 of a contour coding apparatus in the first aspect of the invention.

Fig. 3 is a block diagram of embodiment 2 of a contour decoding apparatus in the first aspect of the invention.

Fig. 4 is a conceptual diagram about practical examples of setting the baseline in the contour coding method and contour decoding method of the first aspect of the invention:
(a) is an example of drawing a border line vertically with the horizontal axis as baseline, and
(b) is an example of drawing a border line horizontally with the vertical axis as baseline.

Fig. 5 is a block diagram of embodiment 3 of the contour coding apparatus adding a function for selectively setting the baseline in the first aspect of the invention.

Fig. 6 is a block diagram of embodiment 4 of the contour decoding apparatus adding a function for selectively setting the baseline in the first aspect of the invention.

Fig. 7 is an explanatory diagram showing an example of the baseline to be selected in the first aspect of the invention:
(a) shows the horizontal axis.
(b) shows the vertical axis, and
(c) and (d) shows diagonal axes.

Fig. 8 is a conceptual diagram of contour coding method and contour decoding method according to a second aspect of the invention.

Fig. 9 is a block diagram of embodiment 6 of contour coding apparatus in the second aspect of the invention.

Fig. 10 is a block diagram of embodiment 7 of contour decoding apparatus in the second aspect of the invention.

Fig. 11 is a block diagram of other embodiment 8 of contour coding apparatus in the second aspect of the invention.

Fig. 12 is a block diagram of other embodiment 9 of contour decoding apparatus in the second aspect of the invention.

Fig. 13 is an example of region combination by using AND and plural baselines in the second aspect of the invention.

Fig. 14 is a diagram shoving the superiority of changing the number of divisions in dividing for sampling.

Fig. 15 is a conceptual diagram of contour coding method and contour decoding method according to a fourth aspect of the invention:
(a) shows the block to be coded,
(b) shows the reference block,
(c) shows the difference block, and
(d) shows the result of processing by changing the baseline in the difference block.

Fig. 16 is a block diagram of embodiment 12 of contour coding apparatus in the fourth aspect of the invention.

Fig. 17 is a block diagram of embodiment 13 of contour decoding apparatus in the fourth aspect of the invention.

Fig. 18 is a diagram showing examples of drawing division border lines for selection of baseline and sampling:
(a) the border line is horizontal, and
(b) the border line is vertical.

Fig. 19 is an example of a recording medium recording the method of the invention.

### DESCRIPTION OF THE PREFERRED EMBODIMENTS

Preferred embodiments of the invention are described in detail below.

### (Embodiment 1)

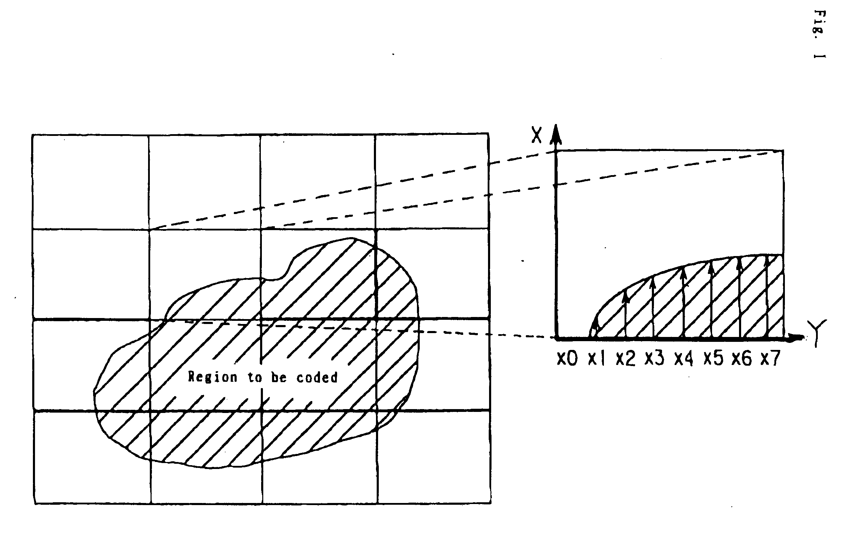

Fig. 1 is a conceptual diagram of contour coding method and contour decoding method of a first aspect of the invention.

In this embodiment, for the convenience of explanation, the contour graphic is two-dimensional, and it is divided by two-dimensional blocks and processed, but not limited to this, for example, the periphery of the contour graphic may be cut out into a specified shape, and it may be processed on the basis of the cut-out frame, or the image frame displaying the contour graphic may be directly used as the reference for processing.

In Fig. 1, the region painted solid by the image (left in Fig. 1) of the two-dimensional contour graphic denotes the object, and the boundary of the solid portion and the blank portion is the contour of the object. The image frame of the contour graphic is divided into 16 sections, and a part is cut out to obtain a block. The vertical direction of the block is expressed as the X-axis, and the horizontal direction as the Y-axis (right in Fig. 1). As an advantage of forming into blocks, if the contour graphic is complicated, by cutting out a part as a block, most contour lines can be expressed as low-order polynomial formulas (smooth curves).

Next, the bottom of the block (as the baseline) is divided by eight straight lines, and the distance from the block bottom to the contour line is calculated {x0, x1, ..., x7}. The distance {x0, x1, ..., x7} can be coded by a small number of bits by using orthogonal transform such as DCT.

On the other hand, plotting {x0, x1, ..., x7} on the X-coordinates, the Y-axis positions of eight lines indicated by arrow used in division can be known, so that they can be specified as points on the contour lines (or contour pixels), and therefore the contour may be approximated precisely by tracing the coordinate points corresponding to {x0, x1, ..., x7} by smooth curves. (In Fig. 1, x0, x1, ..., x7 are expressed on the Y-axis, but they are not intended to express the Y-axis coordinate values, but denote the length of the straight lines indicated by arrow, and they are shown on the Y-axis for the sake of convenience only.)

From this viewpoint, it is evident that the contour can be decoded if {x0, x1, ..., x7} is coded, and that {x0, x1, ..., x7} can be coded efficiently by orthogonal transform such as DCT.

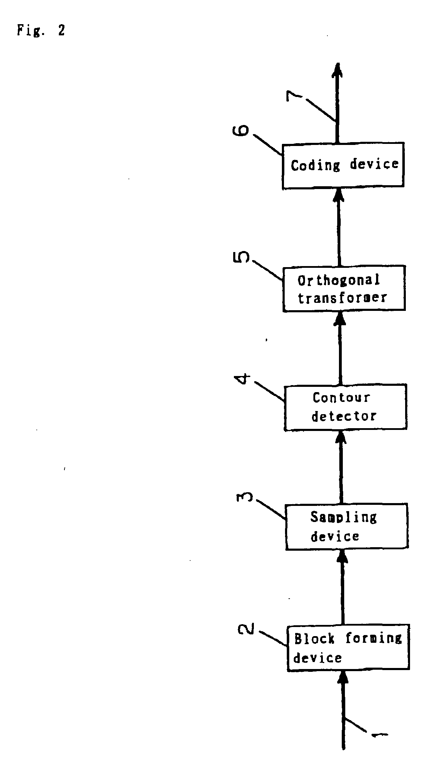

Fig. 2 is a block diagram of an embodiment of a contour coding apparatus conforming to this method. In the diagram, reference numeral 1 shows a contour graphic, 2 is a block forming device for dividing the contour graphic into blocks, 3 is a sampling device for dividing a block into n+1, and extracting the boundary value, 4 is a contour detector for detecting the contour position on the boundary, 5 is a orthogonal transformer, 6 is a coding device, and 7 is a coded signal.

Embodiment 1 in Fig. 2 thus constituted is described below. The contour graphic is supposed to be expressed as an image having a true value inside the contour and a false value outside the contour. That is, the solid painted portion in Fig. 1 is true, and the blank portion is false. The block forming device 2 divides the contour graphic 1 into rectangular blocks, and cuts out as shown right in Fig. 1. One side of the cut-out rectangular block is used as the baseline, and the sampling device 3 divides the block into n+1 sections by n straight lines provided along the baseline (corresponding to seven straight lines indicated by arrow in the block cut out in Fig. 1). For example, when dividing by the vertical line with the horizontal line at the lower end of block as baseline, n vertical lines in the block are border lines of division. The contour detector 4 calculates the number of true values positioned above the border line from the baseline about each border line. The values correspond to {x0, x1, ..., x7} shown right in Fig. 1, and express the distance from the baseline to the contour line.

The orthogonal transformer 5 orthogonally transforms {x0, x1, ..., x7} in batch, and the orthogonally transformed component is coded by variable length in the coding device 6 and a coded signal is obtained. Methods of orthogonal transform include DCT, DST, KLT, and others, and color signals are mostly DCT coded, and the DCT is preferred considering sharing of devices with coding apparatus of color signals. Usually, the contour line is smooth, and orthogonal transform component corresponding to the high frequency component hardly occurs, and therefore by variable length coding by making use of such deviation of frequency of occurrence, the number of bits can be saved.

When coding by the coding device 6, the orthogonal transform component corresponding to the high frequency component changes slightly in the contour shape, and deterioration is trifling visually, and therefore coding distortion may be more allowable than in low frequency component, and by making use of this feature, when the orthogonal transform component corresponding to high frequency component is quantized roughly and coded, the number of bits may be saved further.

Thus, the contour graphic can be coded efficiently in block units, but, of course, the coding efficiency of contour graphic is enhanced by processing contour graphic without dividing into blocks.

### (Embodiment 2)

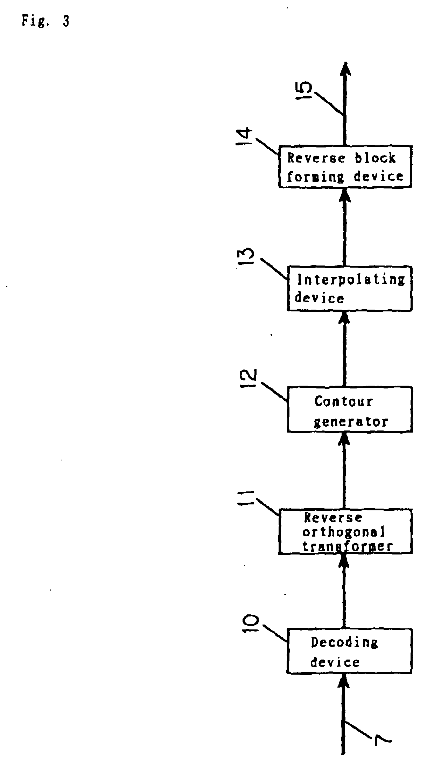

Fig. 3 is a block diagram of embodiment 2 of contour decoding apparatus in the first aspect of the invention. In the diagram, reference numeral 7 denotes a coded signal, 10 is a decoding device, 11 is a reverse orthogonal transformer, 12 is a contour generator for generating a contour position at the boundary, 13 is an interpolator for interpolating and generating a contour line, 14 is a reverse block forming device for composing a region graphic by integrating blocks, and 15 is a decoded contour graphic signal. The contour decoding apparatus in the diagram is for correctly decoding the coded signal 7 that has been coded by the contour coding apparatus in Fig. 2.

Embodiment 2 in Fig. 3 thus constituted is described below. The coded signal 7 is decoded in the decoding device 10, and is decoded into the same signal as the one at the time of input into the decoding device 6 in Fig. 2. The reverse orthogonal transformer 11 transformers reversely to the orthogonal transformer 5 in Fig. 2, and delivers {x0, x1, ..., x7}. The contour generator 12 generates points on the contour at positions at distance {x0, x1, ..., x7} from the baseline on the same contour as the division boundary as the block in Fig. 2. The interpolator 13 traces the contour points determined by the contour generator 12 by straight line or spline curve, and generates a border line in the block. The reverse block forming device 14 traces the border lines between blocks, and decodes the contour graphic.

In the inputs in embodiment 1 in Fig. 2, the values are expressed to be true or false, and Fig. 3 shows a case of output of the contour line itself, but since expression by true and false values and expression by contour line can be easily converted, either may be employed. For example, same effects are realized by the interpolator 13, in which true values are generated from the baseline to the contour point and false values in all others. instead of output of contour points by the contour generator 12 in Fig. 3, and the values at positions not known whether true or false are directly obtained by the specified predictive formula from the values in the vicinity where determined to be true or false

Thus, the coded signal coded by the contour coding apparatus in Fig. 2 can be decoded correctly.

### (Embodiment 3)

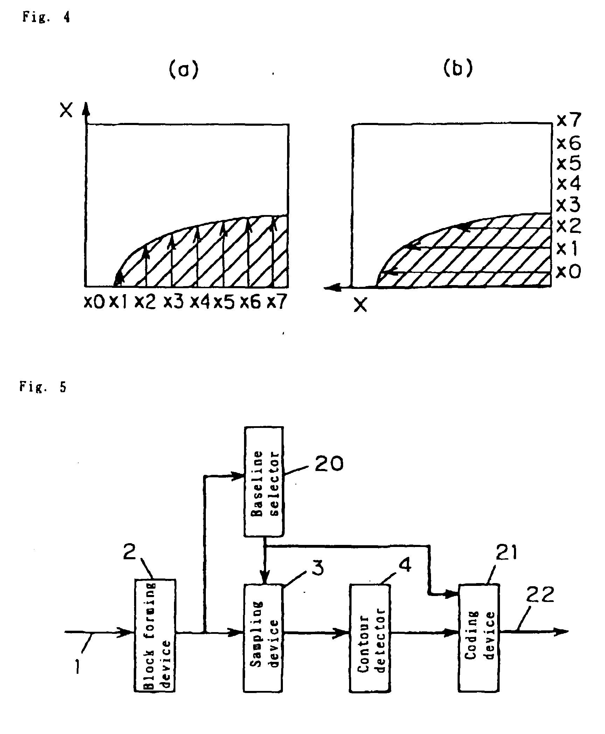

Fig. 4 is a conceptual diagram of practical examples of setting the baseline in the contour coding method and contour decoding method in the first aspect of the invention. When coding the contour in the block, the border line is drawn vertically with the horizontal axis as the baseline in Fig. 4 (a), and the border line is drawn horizontally with the vertical axis as the baseline in Fig. 4 (b).

In {x0, x1, ..., x7} in Fig. 4 (a), there are few non-zero values, but there is no large value, and in {x0, x1, ..., x7} in Fig. 4 (b), to the contrary, there are many non-zero values, but there are many large values. Which is smaller in the number of bits after coding depends on the coding method, and in the orthogonal transform such as DCT, the number of bits is smaller in Fig. 4 (a) where the transform components corresponding to high frequency components are few. Thus, since the number of bits of coding varies with the selection of the baseline, by selecting a proper baseline corresponding to the contour, the coding efficiency is higher as compared with usual selection of a specific baseline.

Fig. 5 is a block diagram of embodiment 3 of a contour coding apparatus employing this contour coding method. In the diagram, what differs from the block diagram in Fig. 2 lies in a baseline selector 20 for selecting a baseline, a coding device 21, and a coded signal 22.

Embodiment 3 in Fig. 5 thus constituted is described below. Devices identified with same reference numerals as in the block diagram in Fig. 2 operate similarly, and explanations are omitted. From the contour formed in blocks by the block forming device 2, the baseline to be used in the sampling device 3 is determined by the baseline selector 20. In the embodiment, processing through the block forming device 2 is described, but, without dividing into blocks, the entire contour graphic can be processed similarly.

As the index of selection of baseline, the function for predicting the number of bits after coding is determined from the contour and baseline, and the baseline small in this function value (estimated to be small in the number of bits) should be selected. The selected baseline must be noticed to the contour decoding apparatus in order to decode correctly, and therefore it is coded in the coding device 21 simultaneously with the distance from the contour point {x0, x1, ..., x7}, and the coded signal 22 is obtained.

The coding device 21 is a more general coding device including the combination of the orthogonal transformer 5 and coding device 6 in Fig. 2, and it may be a coding device for performing predictive coding, instead of orthogonal transform.

In this way, by preparing plural (m) baselines, the coding efficiency may be enhanced by changing over the baselines.

### (Embodiment 4)

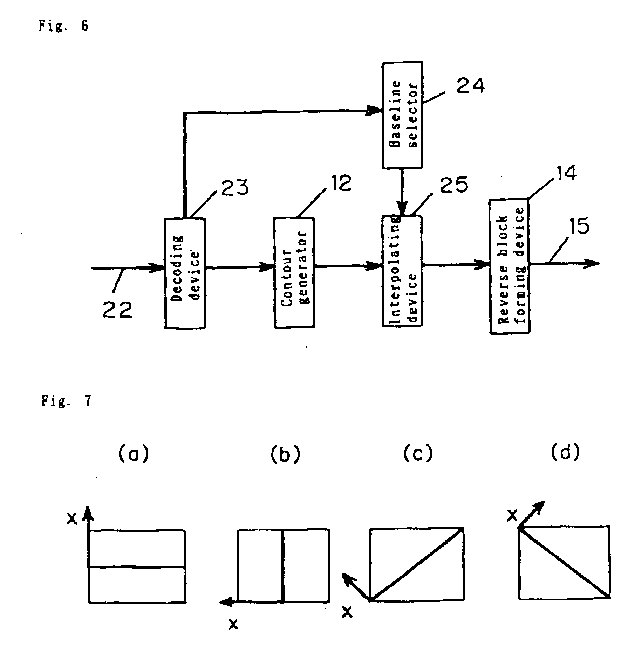

Fig. 6 is a block diagram of embodiment 4 of the contour decoding apparatus corresponding to the contour coding apparatus in Fig. 5. In the diagram, what differs from the block diagram in Fig. 3 lies in the coded signal 22, decoding device 23, base selector 24, and interpolator 25. The contour decoding apparatus in the diagram is intended to decode correctly the coded signal 22 coded by the contour coding apparatus in Fig. 5.

Embodiment 4 in Fig. 6 thus constituted is described below. Devices identified with same reference numerals as in the block diagram in Fig. 3 operate similarly, and hence explanation is omitted. The coded signal 22 is decoded by the decoding device 23, the distance {x0, x1, ..., x7} to the contour points is delivered to the contour generator 12, and the code indicating the baseline is delivered to the baseline selector 24. Since the baseline selector 24 selects the same baseline as the baseline selector 20 in Fig. 5, the interpolator 25 can decode the contour points correctly by using the correct baseline.

In this way, the signal coded by the contour coding apparatus in Fig. 5 can be decoded correctly.

### (Embodiment 5)

Fig. 7 shows examples of plural baselines to be selected. The rectangular frame in Fig. 7 shows either the image frame of the contour graphic or the block frame of block division.

As the baselines, in order to code the contours of various shapes efficiently, it is preferred to use baselines similar to the shapes of contours occurring frequently. For example, if using two baselines, it is efficient to combine the horizontal axis and vertical axis as shown in Fig. 7 (a) and Fig. 7 (b). If using four baselines, by combining the horizontal axis and vertical axis with diagonal axes as shown in Fig. 7 (a), Fig. 7 (b), Fig. 7 (c), and Fig. 7 (d), the average of the difference with the contour lines is smaller, so that the coding efficiency may be enhanced.

### (Embodiment 6)

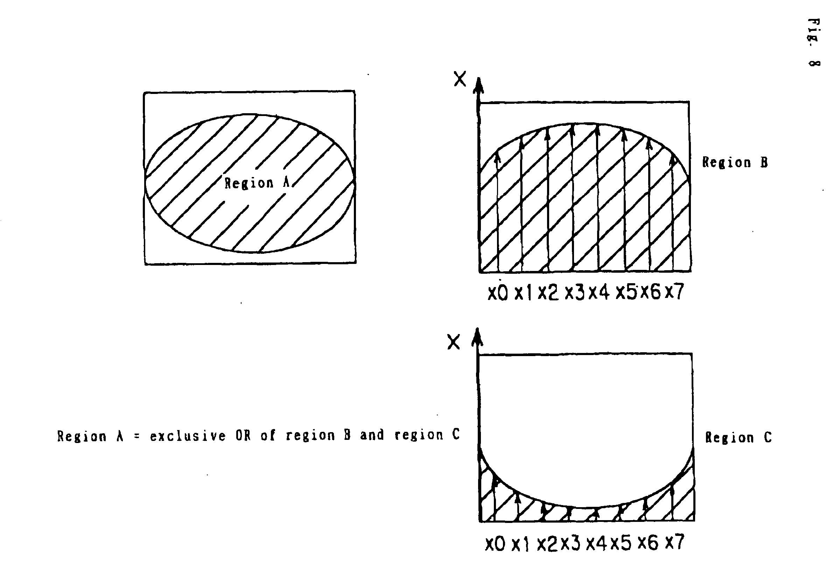

Fig. 8 is a conceptual diagram of contour coding method and contour decoding method according to a second aspect of the invention. In order to sample when coding the contour in the block, n (eight in Fig. 8) straight lines are used, but the same lines (border lines) may possibly intersect with plural contour lines of the contour graphic. That is, points on plural contours may be present on a same border line. For example, in the solid region A in Fig. 8, there arc two contour points when divided by a vertical line with the horizontal axis as the baseline.

Accordingly, by making use of the fact that region A in Fig. 8 is composed of exclusive OR of region B in Fig. 8 and region C in Fig. 8, by coding the each region of region B in Fig. 8 and region C in Fig. 8, instead of coding region A in Fig. 8 directly, there is only one contour point on the border line, and it is known that coding processing is easier. In this way, the contour graphic showing region A can be divided into the partial contour graphic showing region B and partial contour graphic showing region C.

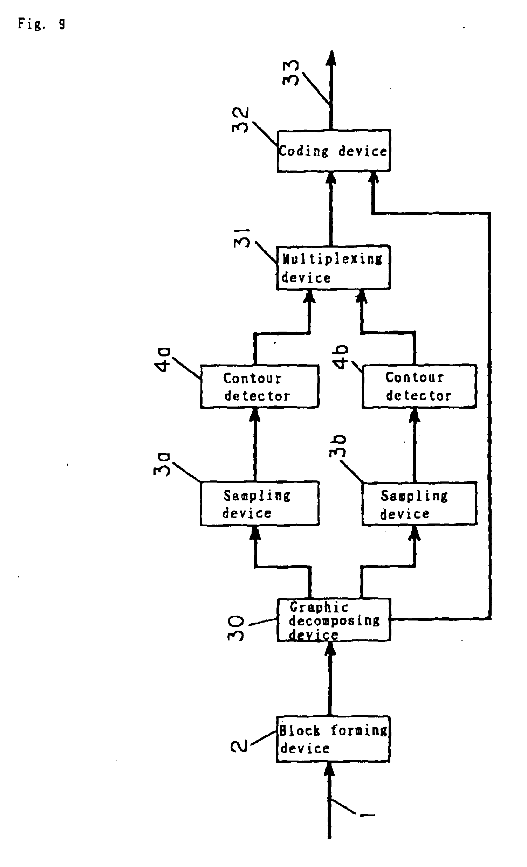

Fig. 9 is a block diagram of embodiment 6 of the contour coding apparatus employing this technique. In the diagram, what differs from the block diagram in Fig. 2 lies in a graphic decomposing device 30 for decomposing the contour graphic, a multiplexer 31 for multiplexing the code of each graphic, a coding device 32, and a coded signal 33. Operations of sampling devices 3a, 3b and contour detectors 4a, 4b are same as those of the sampling device 3 and contour detector 4 in Fig. 2.

Embodiment 6 in Fig. 9 thus constituted is described below. Devices identified with same reference numerals as in the block diagram in Fig. 2 operate similarly, and the explanation is omitted. The contour graphic formed into blocks by the block forming device 2 is decomposed into plural partial contour graphics by the graphic decomposing device 30.

For example, region A in Fig. 8 is divided into region B in Fig. 8 and region C in Fig. 8. In each divided region, sampling and contour detection are conducted, and contour data in each region is multiplexed, and information necessary for synthesizing the regions in the decoding apparatus (the method of synthesizing region A from region B and region C) is simultaneously coded in the coding device 32, and the coded signal 33 is obtained.

Thus, a complicated contour graphic having plural contour paints on the border line can be coded efficiently.

### (Embodiment 7)

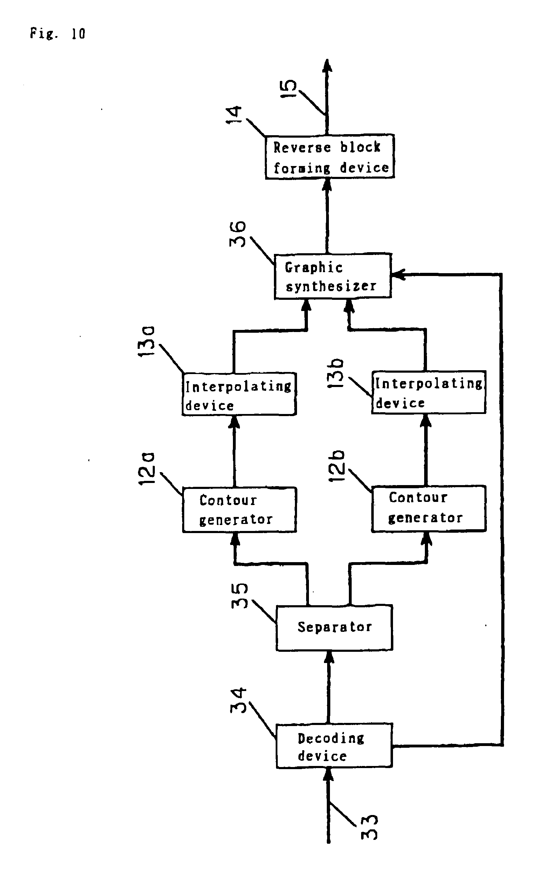

Fig. 10 is a block diagram of embodiment 7 of the contour coding apparatus. In the diagram, that differs from the block diagram in Fig. 3 lies in the coded signal 33, a decoding device 34, a separator 35, and a graphic synthesizer 36. Operations of the contour generators 12a, 12b and interpolators 13a, 13b are same as those of the contour generator 12 and interpolator 13 in Fig. 3. The contour decoding apparatus in the diagram is intended to decode correctly the coded signal 33 coded by the contour coding apparatus in Fig. 9.

Embodiment 7 in Fig. 10 thus constituted is described below. Devices identified with same reference numerals as in the block diagram in Fig. 3 operate similarly, and the explanation is omitted. The coded signal 33 is decoded by the decoding device 34, and the distance to the contour point of each region {x0, x1, ..., x7} and the information showing the synthesizing method of the region are delivered. The separator 35 separates the distance up to the contour point so as to correspond to each region, and delivers to the contour generators 12a, 12b corresponding to the regions. The decoded contour graphic corresponding to each region is synthesized in the graphic synthesizer 36 according to the information shoving the synthesizing method decoded in the decoding device 34.

Thus, the signal coded by the contour coding apparatus in Fig. 9 can be decoded correctly.

### (Embodiment 8)

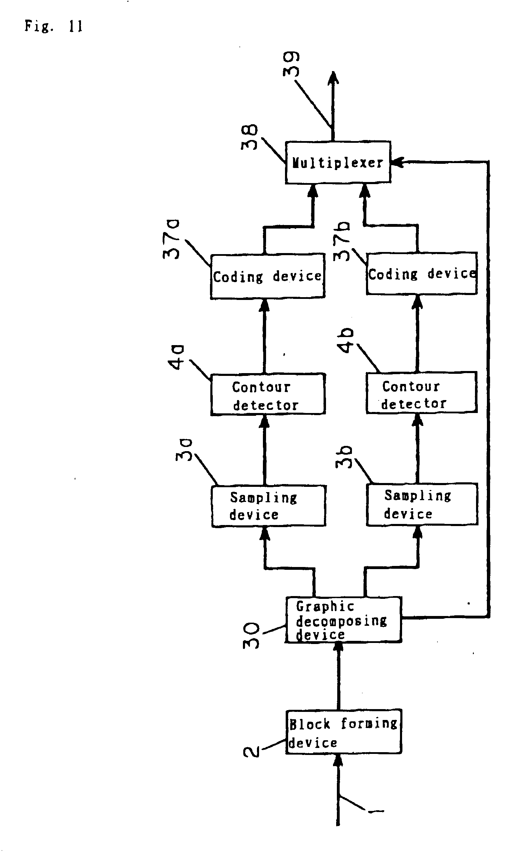

Fig. 11 is a block diagram of other embodiment 8 of contour coding apparatus in the second aspect of the invention. In the diagram, what differs from the block diagram in Fig. 9 lies in coding devices 37a, 37b, a multiplexer 38 for multiplexing the code of each graphic and synthesizing information of region, and a coded signal 39.

Embodiment 8 in Fig. 11 thus constituted is described below. Devices identified with same reference numerals as in the block diagram in Fig. 9 operate similarly, and the explanation is omitted. In embodiment 7 in Fig. 9, the position of contour of each decomposed region is first multiplexed and then coded, but in this embodiment 8, first coding in each region by the coding devices 37a, 37b, information necessary for synthesizing the code of each region and the region is multiplexed in the multiplexer 38 after coding. The same effect as in the invention may be realized also by exchanging the sequence of the coding device and multiplexer as in this embodiment 8.

### (Embodiment 9)

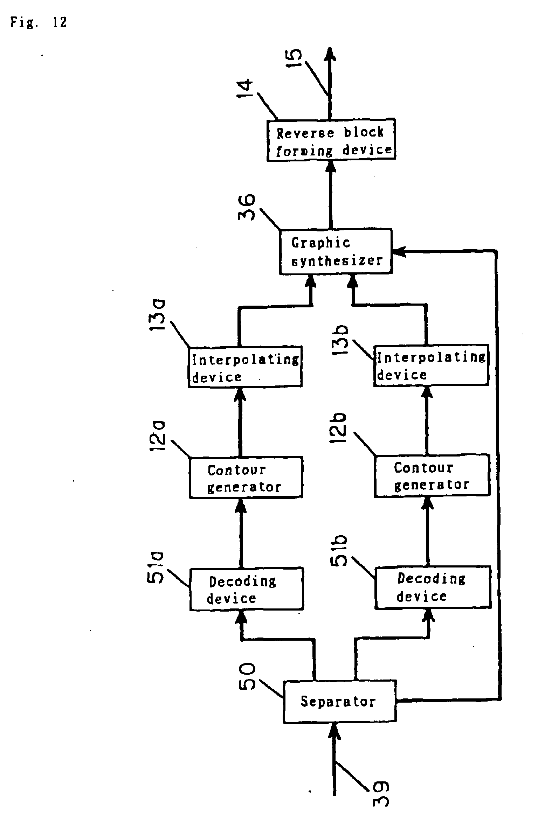

Fig. 12 is a block diagram of other embodiment 9 of contour decoding apparatus in the second aspect of the invention. In the diagram, what differs from the block diagram in Fig. 10 lies in a separator 50 and decoding devices 51a, 51b. The contour decoding apparatus in the diagram is intended to decode correctly the coded signal 33 coded by the contour coding apparatus in Fig. 11.

Embodiment 9 in Fig. 12 thus constituted is described below. Devices identified with same reference numerals as in the block diagram in Fig. 10 operate similarly, and the explanation is omitted. In embodiment 7 in Fig. 10, the coded signal is first decoded and separated, and the contour is decoded in each region, whereas in this embodiment 9, first the information necessary for synthesizing the code of each region and the region is separated in the separator 50, and the contour position is decoded in the decoding devices 51a, 51b in each region.

Thus, the coded signal coded by the contour coding apparatus in Fig. 11 can be decoded correctly.

### (Embodiment 10)

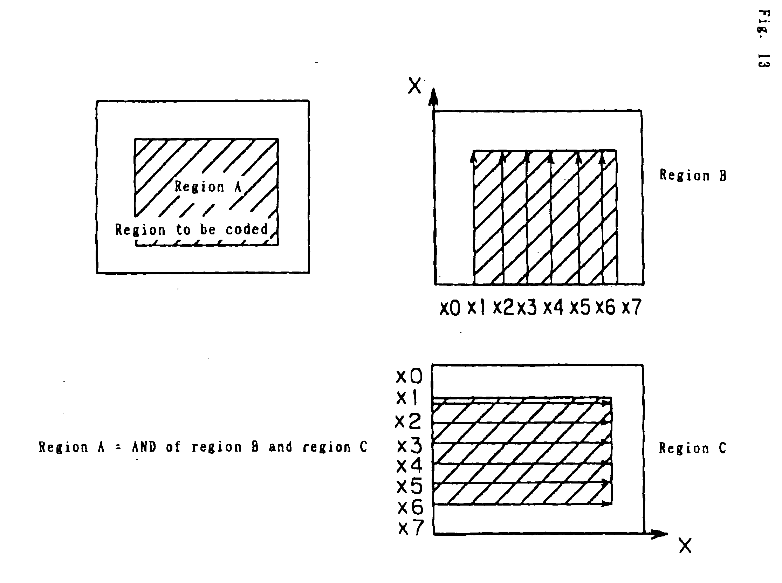

Fig. 13 is an explanatory diagram of using AND as the logic operation of other synthesizing method of contour graphic in the second aspect of the invention, and changing over the baseline by selection of the baseline.

The region painted solid in Fig. 13 has a true value, and the blank region has a false value, and the changing position of true and false value is the contour. Since region A in Fig. 13 can be expressed as the AND of region B in Fig. 13 and region C in Fig. 13, by coding region B in Fig. 13 and region C in Fig. 13, region A in Fig. 13 can be decoded correctly in the contour decoding apparatus. At this time, by coding region B with the horizontal axis as baseline, and region C with the vertical axis as baseline, the coding efficiency may be further enhanced as explained in embodiment 3, as compared with the case of coding of both region B and region C by the same baseline.

### (Embodiment 11)

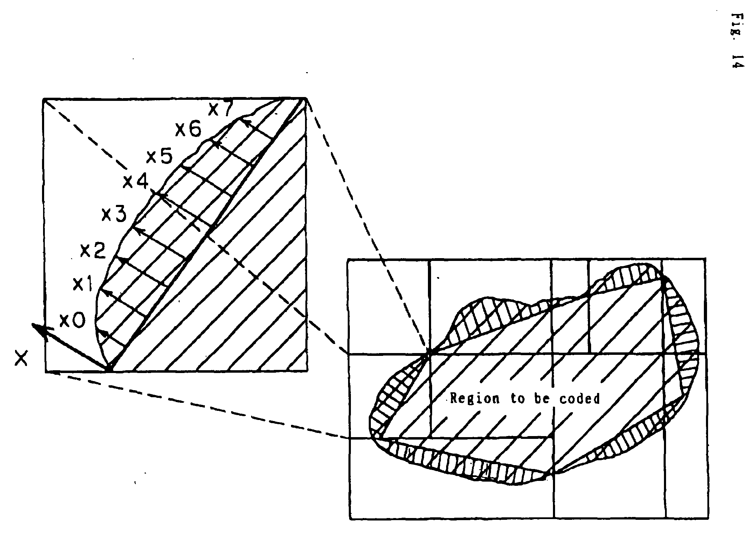

Fig. 14 is a diagram showing the superiority of changing the number of divisions when dividing the contour graphic by plural straight lines for the purpose of sampling. In the foregoing description, it is explained to divide into n+1 by the sampling means, but the number of divisions is not mentioned.

Considering a case of dividing the contour graphic into blocks beforehand, if the block size is fixed, the number of divisions may be fixed (for example. 9), but if the block size varies, the number of divisions must be changed accordingly, or the contour shape cannot be expressed correctly in a large block, and coding distortion of large block may be obvious visually.

Accordingly, as shown in Fig. 14, since the intervals of plural straight lines for sampling are almost constant, the number of samples increases depending on the block size. In this way, when the number of divisions is increased depending on the block size increase, distortion of contour coding is made uniform, and is less obvious visually. If the block size is same, meanwhile, since the length of the contour line in the diagonal direction is longer than the length of contour lines in the horizontal and vertical direction, as far as complication of processing is permitted, the coding efficiency may be further increased by varying the number of divisions depending on the length of the contour line.

When changing the number of divisions, incidentally, it is necessary to multiples the code showing the number of divisions on the contour coded signal as required, so that the number of divisions of the block can be correctly obtained in the contour decoding apparatus.

### (Embodiment 12)

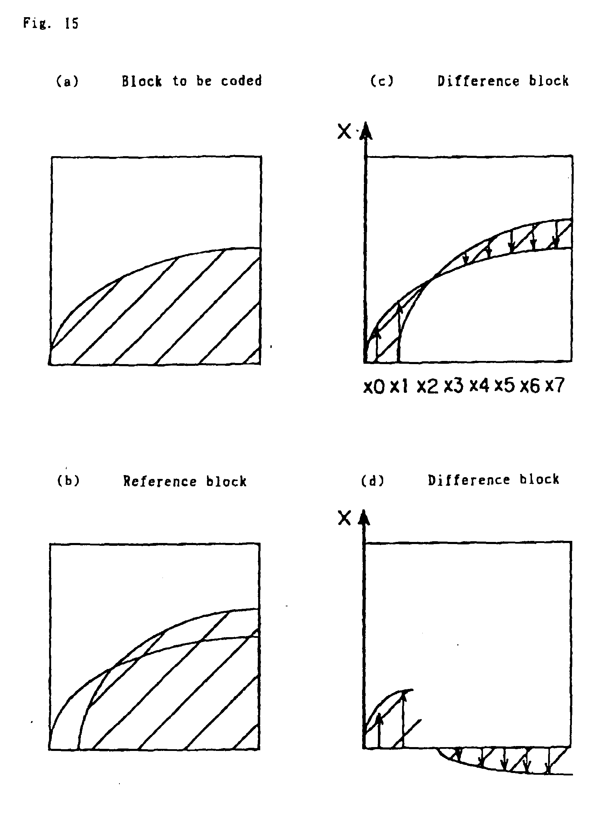

Fig. 15 is a conceptual diagram of contour coding method and contour decoding method according to a third aspect of the invention. When coding a contour graphic, a contour graphic as a reference to the objective contour graphic may be obtained preliminarily, and it relates to predictive coding used in stratified coding or coding of moving picture. For example, predictive coding is conducted by using a rough contour graphic in the case of stratified coding, or using decoded contour graphic close in time in the case of moving picture.

If there is a reference contour graphic and the desired contour graphic can be estimated precisely from the reference contour graphic, by coding the difference from the reference contour graphic instead of coding the desired contour graphic directly, the coding efficiency can be enhanced. Fig. 15 shows an example of block processing of contour graphic, and Fig. 15 (a) shows the block to be coded, and Fig. 15 (b) shows the reference block created from the reference contour graphic. The difference between the block to be coded and the reference block is shown in Fig. 15 (c), and each arrow indicates the difference from each contour point of the reference block to the contour of the block to be coded, and each arrow line drawn position indicates the distance between feature points disposed on the contour line of the contour graphic in Fig. 15 (a) and the reference contour graphic in Fig. 15 (b). Using the arrow direction (positive in upward and negative in downward) as the sign, and supposing the magnitude to be {x0, x1, ..., x7} and the horizontal axis to be baseline, the difference block in Fig. 15 (d) is composed.

The difference block in Fig. 15 (d) can be handled same as the contour graphic formed in block explained so far, and it may be coded by supposing {x0, x1, ..., x7} to be the distance to the contour point. At this time, when reference block and the block to be coded nearly coincide, {x0, x1, ..., x7} are almost zero, and coding is not necessary, and the coding efficiency is enhanced.

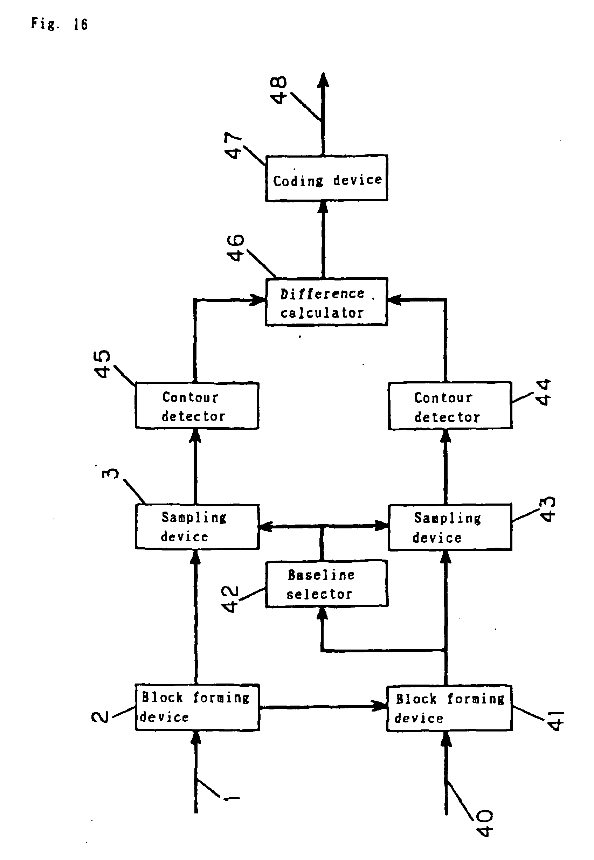

Fig. 16 is a block diagram of embodiment 12 of contour coding apparatus employing this coding technique. In the diagram, what differs fro: the block diagram in Fig. 5 lies in a predictive contour graphic 40 which is a reference contour graphic, a block forming device 41, a baseline selector 42, a sampling device 43, contour detectors 44, 45, a differential calculator 46, a coding device 47, and a coded signal 48. The operation of the contour detectors 44, 45 is same as that of the contour detector 4 in the block diagram in Fig. 5.

Embodiment 12 in Fig. 16 thus constituted is described below. Devices identified with same reference numerals as in the block diagram in Fig. 5 operate similarly, and the explanation is omitted. The predictive contour graphic 40 is formed into blocks by the block forming device 41, and delivered as reference block signal. The baseline selector 42 determines the baseline of sampling from the reference block signal, and notices to the sampling devices 3, 43. By the sampling device 43 and contour detector 44, the position of the contour point of the reference block signal is calculated. The differential calculator 46 subtracts the position of the contour point of the reference block from the position of the contour point of the block to be coded, and the coding device 47 codes the difference of the subtracter 46, and the coded signal 48 is obtained.

Thus, by using the reference contour graphic which is a predictive contour graphic, the desired contour graphic can be coded efficiently.

### (Embodiment 13)

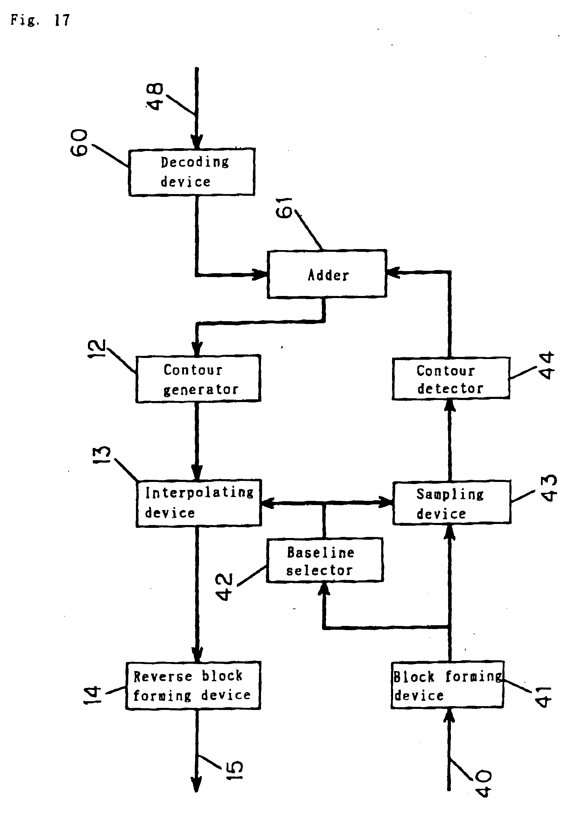

Fig. 17 is a block diagram of embodiment 13 of contour decoding apparatus according to the technique of embodiment 12. In the diagram, what differs from the block diagram in Fig. 6 lies in a predictive contour graphic 40 which is a reference contour graphic, a block forming device 41, a baseline selector 42, a sampling device 43, a contour detector 44, a coded signal 48, a decoding device 60, and an adder 61. The contour decoding apparatus in the diagram is intended to decode correctly the coded signal 33 coded by the contour coding apparatus in Fig. 16.

Embodiment 13 in Fig. 17 thus constituted is described below. Devices identified with same reference numerals as in the block diagram in Fig. 6 and block diagram in Fig. 16 operate similarly, and the explanation is omitted. The coded signal 48 is decoded by the decoding device 60, and the position of the contour point of the reference block is added by the adder 61. The sum of the adder 61 is fed into the contour generator 12, and the subsequent processing is same as in embodiment 4 in Fig. 6.

Since the predictive contour graphic is same as in the contour coding apparatus in Fig. 16, in this way, the output of the contour detector 44 and the baseline of the baseline selector 42 completely coincide with the outputs of the devices of the same reference numerals as in the contour coding apparatus in Fig. 16, so that correct decoding is achieved.

### (Embodiment 14)

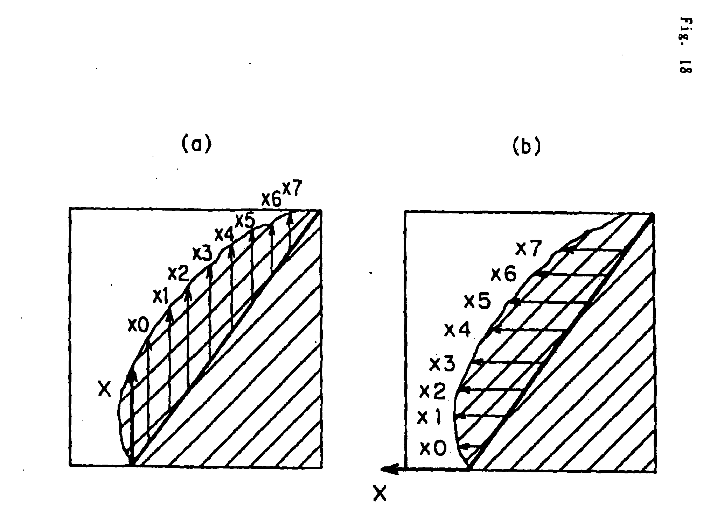

Fig. 18 is a diagram for explaining a method of drawing plural straight lines (border lines) for dividing into n+1 for selecting the baseline and sampling therefrom.

When the contour graphic is divided into blocks, in Fig. 18, the baseline is specified by the curve portion of the contour graphic, and it is selected so that the distance from the contour graphic may be as short as possible.

The method of dividing the rectangular block into nil along the selected baseline is arbitrary, but supposing the horizontal and vertical frames of the rectangular block to be axes of coordinates, if the border line is oblique to the axis of coordinates, the position on the borderline {x0, x1, ..., x7} must be obtained by calculating fro: the two-dimensional coordinates. However, when the border line is horizontal (Fig. 18 (a)) or vertical (Fig. 18 (b)), the difference is calculated in one-dimensional direction (horizontal or vertical) only, and calculation is easy. Accordingly, by dividing the border line to be horizontal line or vertical line, the processing quantity in the invention can be reduced.

Meanwhile, selection of border line either horizontal or vertical may be judged by calculating the intersection angle of the baseline with the horizontal axis or vertical axis, and selecting the closer to the intersection angle of 90 degrees.

### (Embodiment 15)

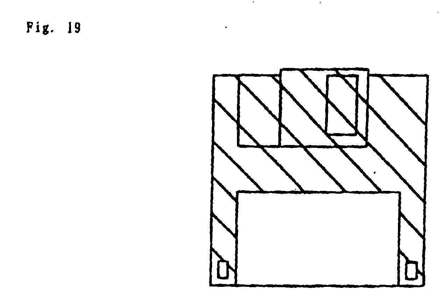

The first to fourth aspects of the invention are realized by a program, and by recording it in a recording medium such as floppy disk and transferring, it can be executed easily in other independent computer system. As an example of recording medium, a floppy disk is shown in Fig. 19.

In this embodiment, the floppy disk is presented as the recording medium, but it can be similarly realized by IC card, CD-ROM, cassette tape or any other capable of recording a program.

Thus, according to the contour graphic coding and decoding method of the invention, and the contour coding and decoding apparatus employing the same method, the contour graphic can be coded efficiently.

Moreover, by processing this technique in block units, same block units as in coding of color signal can be used, and the ion lair graphic can be easily added to the conventional color signal coding technique. In addition, the color signal and its contour graphic correlate to each other, and by realizing color coding by making use of information of contour graphic in block units, coding efficiency of color coding can be also enhanced.

## Claims

1. A contour coding method for coding a contour graphic, therein a straight line selectively arranged around said contour graphic is used as a baseline, intersections of n straight lines crossing this baseline at a specific angle and the contour are calculated, and the distance between each intersection and the baseline is coded {x1, x2, ..., xn} to obtain contour coded signals.

2. A contour coding method for coding a contour graphic with the inside and outside of the contour expressed truly or falsely, wherein said contour graphic is decomposed into k (k being a natural number) partial contour graphics, this decomposition expresses the contour graphic by logic operation of every pixel of the k partial contour graphics, the straight line selectively arranged around the contour graphic in every partial contour graphic is used as the baseline, intersections of n straight lines crossing the baseline at a specific angle and the partial contour graphics are calculated, and the distance between each intersection and the baseline is coded {x1, x2, ..., xn}, and the contour coded signals are obtained together with the signals shoving the constitution of the partial contour graphics.

3. A contour coding method of claim 2, wherein exclusive OR is calculated by said logic operation.

4. A contour coding method of claim 2, wherein the contour graphic is decomposed into partial contour graphics so that there may be only one intersection at most with the contour on n straight lines crossing with the baseline at a specific angle.

5. A contour coding method for coding a contour graphic, wherein a predictive contour graphic of the contour graphic to be coded is created, n feature points are provided on the contour line of this predictive contour graphic, the distance from each feature point of the predictive contour graphic to the contour graphic at the corresponding image position is coded {x1, x2, ..., xn}, and the contour coded signals are obtained.

6. A contour coding method of claim 5, wherein the distance in the vertical direction of said predictive contour graphic at said feature points is {x1, x2, ..., xn}.

7. A contour coding method for coding a contour graphic, wherein a predictive contour graphic of the contour graphic to be coded is created, a straight line selectively arranged around the contour graphic is used as a first baseline, a straight line selectively arranged around the predictive contour graphic is used as a second baseline, intersections of n straight lines crossing the first baseline at a specific angle and the contour graphic are calculated, intersections of n straight lines crossing the second baseline at a specific angle and the predictive contour graphic are calculated, the first distance of the intersection of the contour graphic and the first baseline and the second distance of the intersection of the predictive contour graphic and the second baseline are calculated, and the difference of the first and second distances at the corresponding image position is coded {x1, x2, ..., xn} to obtain the contour coded signals.

8. A contour coding method of claim 5 or 7, wherein the contour graphic is a moving picture, and said predictive contour graphic is created from the image before, or after, or before and after in time.

9. A contour coding method of any one of claims 1, 2, 5 and 7, therein the baseline is determined by dividing the contour graphic into pixel regions of specified shape, and selecting either the straight line of a specific side of the pixel region of specified shape or the straight line drawn from the apex of the specified shape into the inside of the specified shape.

10. A contour coding method of claim 9, wherein the specified shape is rectangular, and the pixel dividing method in the rectangular shape is different in each rectangular region, and the rectangular region dividing method is coded as additional information.

11. A contour coding method of any one of claims 1, 2, 5 and 7, therein the baseline is set by selecting one from a different baselines, and a selection signal showing the selected baseline is included in the contour coded signal.

12. A contour coding method of any one of claims 1, 2, 5 and 7, wherein the horizontal line, vertical line or diagonal line is the baseline.

13. A contour coding method of any one of claims 1, 2, 5 and 7, wherein the value of n is changed depending on the length of the baseline.

14. A contour coding method of any one of claims 1, 2, 5 and 7, wherein the straight line crossing the baseline is either horizontal line or vertical line only.

15. A contour decoding method for decoding the coded signal by the contour coding method of claim 1, wherein coded signals are decoded to produce {x1, x2, ..., xn}, n points of which distance from the baseline on the n straight lines crossing the baseline at the specific angle is individually {x1, x2, ..., xn} are obtained as decoded points on the contour, and the contour graphic of the image is decoded by tracing all decoded points on the contour of the image by the curve.

16. A contour decoding method for decoding the coded signal by the contour coding method of claim 2, wherein the coded signal are decoded to lead out the constitution of the distance of n points {x1, x2, ..., xn} and the partial contour graphics, n points of which distance from the baseline on the n straight lines crossing the baseline at the specific angle is {x1, x2, ..., xn} respectively are obtained as decoded points on the contour, the points on the contour are traced by curves to form the contour, the pixels of the partial contour graphics are expressed truly or falsely, the logic operation of each pixel of each partial contour graphic corresponding to the same pixel position of the image of the partial contour graphic is calculated according to the constitution of the produced partial contour graphics, and the results of logic operations are integrated to decode the contour graphic of the entire picture of the image.

17. A contour decoding method of claim 16, wherein exclusive OR is determined by said logic operation.

18. A contour decoding method for decoding the coded signal by the contour coding method of claim 5, wherein the coded signals are decoded, the distance of n points is calculated {x1, x2, ..., xn}, the predictive contour graphic of the coded contour graphic is created, n feature points are provided on the contour line of the predictive contour graphic, the distance from each feature point is decoded {x1, x2, ..., xn} as points on the contour, and all decoded points on the contour of the image are traced by curves, and the contour graphic of the image is decoded.

19. A contour decoding method of claim 18, wherein the distance in the vertical direction of the predictive contour graphic at the feature point is {x1, x2, ..., xn}.

20. A contour decoding method for decoding the coded signal by the contour coding method of claim 7, wherein the coded signals are decoded to calculate the distance difference {x1, x2, ..., xn}, the predictive contour graphic of the coded contour graphic is created, n points of which distance from the predictive contour graphic is {x1, x2, ..., xn} on n straight lines crossing the baseline of the predictive contour graphic at the specific angle are decoded as points on the contour, and all decoded points on the contour of the image are traced by curves, so that the contour graphic of the image is decoded.

21. A contour decoding method of claim 18 or 20, wherein the contour graphic is a moving picture, and said predictive contour graphic is created from the image before, or after, or before and after in time.

22. A contour decoding method of any one of claims 15, 16, 18 and 20, wherein the baseline is determined by dividing the contour graphic into pixel regions of specified shape, and selecting either the straight line of a specific side of the pixel region of specified shape or the straight line drawn from the apex of the specified shape into the inside of the specified shape.

23. A contour decoding method of claim 22, wherein the pixel dividing method in the rectangular shape is different in each rectangular region, and the rectangular region dividing method coded as additional information is decoded to obtain the pixel dividing method of the rectangular shape.

24. A contour decoding method of any one of claims 15, 16, 18 and 20, wherein the baseline is set by selecting one from m different baselines, and a selection signal showing the selected baseline is included in the contour coded signal.

25. A contour decoding method of any one of claims 15, 16, 18 and 20, wherein the horizontal line, vertical line or diagonal line is the baseline.

26. A contour decoding method of any one of claims 15, 16, 18 and 20, wherein the value of n is changed depending on the length of the baseline.

27. A contour decoding method of any one of claims 15, 16, 18 and 20, wherein the straight line crossing the baseline is either horizontal line or vertical line only.

28. A recording medium, being a recording medium of a computer in which a program for realizing at least one of claims 1, 2, 5, 7, 15, 16, 18, and 20 is recorded.

29. A contour coding apparatus, being a coding apparatus for coding a contour graphic having the inside and outside of the contour expressed truly or falsely in every pixel, comprising baseline selecting means for selecting a baseline for sampling a contour graphic, sampling means for dividing into n+1 along the baseline selected by the baseline selecting means and delivering true or false value of the division boundary, contour detecting means for detecting and delivering the changing position of the true or false value of the output of the sampling means from true to false or from false to true in every division position, and coding means for coding the output of the contour detecting means and the code showing the baseline selected by the baseline selecting means, wherein the output of the coding means is the contour coded signal.

30. A contour decoding apparatus, being a decoding apparatus for decoding a contour graphic by decoding a contour coded signal coding the contour position of the contour graphic and the code indicating the baseline for specifying the contour position, comprising decoding means for decoding the contour coded signal and delivering the contour position and baseline selection signal, contour generating means for generating a true or false value showing whether inside of contour or outside of contour depending on the contour position of the decoding means, baseline selecting means for selecting the baseline for sampling from the baseline selection signal of the decoding means, and interpolating means for generating a true or false value shoving inside or outside of contour by interpolation by arranging the outputs of the contour generating means according to the baseline selected by the baseline selecting means, wherein the outputs of the interpolating means are integrated to compose the entire graphic.

31. A contour coding apparatus, being a coding apparatus for coding a contour graphic having the inside and outside of the contour expressed truly or falsely in every pixel, comprising block forming means for dividing a contour graphic into blocks of specified shape and delivering, sampling means for dividing the block of the specified shape of the output of the block forming means into n+1 along a specified direction and delivering a true or false value of division boundary, contour detecting means for detecting and delivering the changing position of the true or false value of the output of the sampling means from true to false or from false to true in every division position, and coding means for coding the output of the contour detecting means, wherein the output of the coding means is the contour coded signal.

32. A contour decoding apparatus, being a decoding apparatus for decoding a contour graphic by decoding a contour coded signal coding the contour position of the contour graphic and the code indicating the block forming for specifying the contour position, comprising decoding means for decoding the contour coded signal, contour generating means for generating a true or false value showing whether inside of contour or outside of contour depending on the component of the decoding means, interpolating means for generating a true or false value showing inside or outside of contour of the block of specified shape by interpolation by arranging the outputs of the contour generating means, and reverse block forming means for composing the entire graphic by integrating the outputs of the interpolating means, wherein the output of the reverse block forming means is decoded to obtain the contour graphic.

33. A contour coding apparatus, being a coding apparatus for coding a contour graphic having the inside and outside of the contour expressed truly or falsely in every pixel, comprising block forming means for dividing a contour graphic into blocks of specified shape and delivering, baseline selecting means for selecting a baseline for sampling from the output of the block forming means, sampling means for dividing the output of the block forming means into n+1 along the baseline selected by the baseline selecting means and delivering a true or false value of division boundary. contour detecting means for detecting and delivering the changing position of the true or false value of the output of the sampling means from true to false or from false to true in every division position, and coding means for coding the output of the contour detecting means and the code showing the baseline selected by the baseline selecting means, wherein the output of the coding means is the contour coded signal.

34. A contour decoding apparatus, being a decoding apparatus for decoding a contour graphic by decoding a contour coded signal coding the contour position of the contour graphic and the code indicating the block forming for specifying the contour position and the baseline in the block, comprising decoding means for decoding the contour coded signal and delivering the contour position and the baseline selection signal, contour generating means for generating a true or false value showing whether inside of contour or outside of contour depending on the contour position of the decoding means, baseline selecting means for selecting a baseline for sampling from the baseline selecting signal of the decoding means, interpolating means for generating a true or false value showing inside or outside of contour of the rectangular block by interpolation by arranging the outputs of the contour generating means along the baseline selected by the baseline selecting means, and reverse block forming means for composing the entire graphic by integrating the outputs of the interpolating means, wherein the output of the reverse block forming means is decoded to obtain the contour graphic.

35. A contour coding apparatus, being a coding apparatus for coding a contour graphic having the inside and outside of the contour expressed truly or falsely in every pixel, comprising graphic decomposing means for decomposing a contour graphic into k (k being a natural number) blocks of partial contour graphics that can be synthesized by logic operation, sampling means for dividing each block of partial contour graphic decomposed by the graphic decomposing means into n+1 along a specific direction and delivering a true or false value of division boundary, contour detecting means for detecting and delivering the changing position of the true or false value of the output of the sampling means from true to false or from false to true in every division position, and coding means for coding the output of the contour detecting means of each partial contour graphic and the code showing the synthesizing method of the partial contour graphics, wherein the output of the coding means is the contour coded signal.

36. A contour decoding apparatus, being a decoding apparatus for decoding a contour graphic by decoding a contour coded signal coding the contour position of each partial contour graphic of the contour graphic and the code indicating the synthesizing method of the partial contour graphics, comprising decoding means for decoding the contour coded signal and delivering the contour position and the synthesizing method of the partial contour graphics. separating means for separating the signal of the contour position of the output of the decoding means corresponding to each partial contour graphic, contour generating means for generating a true or false value showing whether inside of contour or outside of contour depending on the contour position as the output of the separating means for each partial contour graphic, interpolating means for generating a true or false value showing inside or outside of contour of the partial contour graphic by interpolation by arranging the outputs of the contour generating means by a specified method, and graphic synthesizing means for synthesizing the outputs of the interpolating means of the partial contour graphics by the synthesizing method of the partial contour graphics of the decoding means, wherein the outputs of the graphic synthesizing means are integrated to compose the entire graphic to obtain a decoded contour graphic.

37. A contour coding apparatus, being a coding apparatus for coding a contour graphic having the inside and outside of the contour expressed truly or falsely in every pixel, comprising block forming means for dividing a contour graphic into blocks of specified shape and delivering, graphic decomposing means for decomposing the block forming means into k (k being a natural number) blocks of partial contour graphics that can be synthesized by logic operation, sampling means for dividing each block of partial contour graphic decomposed by the graphic decomposing means into n+1 along a specific direction and delivering a true or false value of division boundary, contour detecting means for detecting and delivering the changing position of the true or false value of the output of the sampling means from true to false or from false to true in every division position, and coding means for coding the output of the contour detecting means of each partial contour graphic and the code showing the synthesizing method of the partial contour graphics, wherein the output of the coding means is the contour coded signal.

38. A contour decoding apparatus, being a decoding apparatus for decoding a contour graphic by decoding a contour coded signal coding the contour position of each partial contour graphic of the contour graphic, block forming for specifying the contour position, and the code indicating the synthesizing method of the partial contour graphics, comprising decoding means for decoding the contour coded signal and delivering the contour position and the synthesizing method of the partial contour graphics, separating means for separating the signal of the contour position of the output of the decoding means corresponding to each partial contour graphic, contour generating leans for generating a true or false value showing whether inside of contour or outside of contour depending on the contour position as the output of the separating means for each partial contour graphic, interpolating means for generating a true or false value showing inside or outside of contour of the specified shape block of the partial contour graphic by interpolation by arranging the outputs of the contour generating means by a specified method, graphic synthesizing means for synthesizing the outputs of the interpolating means of the partial contour graphics by the synthesizing method of the partial contour graphics of the decoding means, and reverse block forming means for composing the entire graphic by integrating the outputs of the graphic synthesizing means, wherein the outputs of the reverse block forming means are decoded to obtain a contour graphic.

39. A contour coding apparatus, being a coding apparatus for coding a contour graphic having the inside and outside of the contour expressed truly or falsely in every pixel by referring to a predictive contour graphic created by prediction, comprising first baseline selecting means for selecting a baseline for sampling the contour graphic, first sampling means for dividing into n+1 along the baseline selected by the first baseline selecting means and delivering a true or false value of division boundary, first contour detecting means for detecting and delivering the changing position of the true or false value of the output of the sampling means from true to false or from false to true in every division position of the first sampling means, second baseline selecting means for selecting a baseline for sampling the predictive contour graphic, second sampling for dividing into n+1 along the baseline selected by the second baseline selecting means and delivering a true or false value of the division boundary, second contour detecting means for detecting and delivering the changing position of the true or false value of the output of the sampling means from true to false or from false to true in every division position of the second sampling means, subtracting means for subtracting the changing position of the second contour detecting means from the changing position of the first contour detecting means on the same division boundary, and coding means for coding the difference of the subtracting means, wherein the output of the coding means is the contour coded signal.

40. A contour decoding apparatus, being a decoding apparatus for decoding a contour graphic by decoding a contour coded signal coding the difference of contour position of predictive contour graphic and contour graphic, and the code showing the baseline for specifying the difference, by referring to the predictive contour graphic having the inside and outside of the contour expressed truly or falsely in each pixel, comprising baseline selecting means for selecting a baseline for sampling, sampling means for dividing into n+1 along the baseline selected by the baseline selecting means and delivering a true or false value of the division boundary, contour generating means for detecting and delivering the changing position of the true or false value of the output of the sampling means from true to false or from false to true in every division position of the sampling means, decoding means for decoding the contour coded signal and delivering the contour position, adding means for adding the changing position of the same division position of the contour detecting means to the signal of the contour position of the output of the decoding means, and interpolating means for arranging the sums of the adding means in a specified method and generating a true or false value showing inside or outside of the contour by interpolation, wherein the outputs of the interpolating means are integrated and the entire graphic is composed to obtain a decoded contour graphic.

41. A contour coding apparatus, being a coding apparatus for coding a contour graphic having the inside and outside of the contour expressed truly or falsely in every pixel by referring to a predictive contour graphic created by prediction, comprising first block forming means for dividing the contour graphic into blocks of a specified shape and delivering, second block forming means for dividing and delivering the predictive contour graphic in the pixel of the same position as the first block forming means, baseline selecting means for selecting a baseline for sampling from the output of the second block forming means, first sampling means for dividing the output of the first block forming means into n+1 along the selected baseline and delivering a true or false value of division boundary, first contour detecting means for detecting and delivering the changing position of the true or false value of the output of the sampling means from true to false or from false to true in every division position of the first sampling means, second sampling for dividing the output of the second block forming means into n+1 along the selected baseline and delivering a true or false value of the division boundary, second contour detecting means for detecting and delivering the changing position of the true or false value of the output of the sampling means from true to false or from false to true in every division position of the second sampling means, subtracting means for subtracting the changing position of the second contour detecting means from the changing position of the first contour detecting means on the same division boundary, and coding means for coding the difference of the subtracting means, wherein the output of the coding means is the contour coded signal.

42. A contour decoding apparatus, being a decoding apparatus for decoding a contour graphic by decoding a contour coded signal coding the difference of contour position of predictive contour graphic and contour graphic, and the code showing the block forming and baseline for specifying the difference, by referring to the predictive contour graphic having the inside and outside of the contour expressed truly or falsely in each pixel, comprising block forming means for dividing the predictive contour graphic into blocks of specified shape and delivering, baseline selecting means for selecting a baseline for sampling from the output of the block forming means, sampling means for dividing the output of the block forming means into n+1 along the selected baseline and delivering a true or false value of the division boundary, contour generating means for detecting and delivering the changing position of the true or false value of the output of the sampling means from true to false or from false to true in every division position of the sampling means, decoding means for decoding the contour coded signal and delivering the contour position, adding means for adding the changing position of the same division position of the contour detecting means to the signal of the contour position of the output of the decoding means, interpolating means for arranging the sums of the adding means in a specified method and generating a true or false value showing inside or outside of the contour by interpolation, graphic synthesizing means for synthesizing the outputs of the interpolating means by the graphic synthesizing method of the decoding means, and reverse block forming means for integrating the outputs of the graphic synthesizing means and composing the entire graphic, wherein the outputs of the reverse block forming means are decoded to obtain a contour graphic.
